# EUROPEAN PATENT APPLICATION

(11) **EP 4 700 097 A1**
(43) Date of publication of application: **25.02.2026**
(21) Application number: 24809872.5
(22) Date of filing: 20.05.2024
(51) Int. Cl.: C09D 103/00, C09D 129/04, D21H 19/54, D21H 19/44, D21H 19/24

(54) **BARRIER COMPOSITION, USE THEREOF, METHOD FOR MANUFACTURING FLEXIBLE PACKAGING, AND PAPER PACKAGING**

(30) Priority: 19.05.2023 BR 102023009775
(71) Applicant: Suzano S.A., 41810-012 Pituba, Salvador, BA (BR)
(72) Inventor: MARABEZI, Karen, 13480-290 Limeira, SP (BR); DE OLIVEIRA, Joel, 13422-610 Piracicaba, SP (BR)
(74) Representative: Linage González, Rafael
(86) International application number: PCT/BR2024/050203
(87) International publication number: WO 2024/239081

(57) **Abstract**

The present invention relates to a biodegradable and compostable barrier composition for packaging, comprising approximately 20% by weight to approximately 50% by weight of a sealing agent, approximately 40% by weight to approximately 80% by weight of a bio-binding agent and approximately 5% by weight to approximately 10% by weight of an anti-blocking agent. The composition of the present invention relates to a coating composition suitable for coating paper and cardboard substrates, and has good application, sealing and barrier properties with respect to grease, oxygen, oils and/or light transmission. The invention also discloses the use of the barrier composition for application in primary and secondary paper packaging, a method for manufacturing flexible packaging, and paper packaging comprising the barrier composition of the present invention.

## Description

### FIELD OF THE INVENTION

The present invention relates to a biodegradable, compostable barrier composition for packaging comprising about 20% by weight to about 50% by weight of a sealing agent, about 40% by weight to about 80% by weight of a bio-binding agent, and about 5% by weight to about 10% by weight of an anti-blocking agent. The composition of the present invention relates to a coating composition suitable for coating paper and cardboard substrates, and has good application, sealing, and barrier properties against fat, oxygen, oils, and/or light transmission. Also disclosed is the use of the barrier composition for application in primary and secondary paper packaging, a manufacturing method for the flexible packaging and paper packaging comprising the barrier composition of the present invention.

### BACKGROUND OF THE INVENTION

Paper packaging is permeable to oils, fats, gases, water, and other liquids. Oil and fat permeation compromises the external appearance of the packaging, making it oily and sticky. This permeation also interferes with material properties, such as rigidity, delamination strength, and thermal sealing strength, among others. On the other hand, the contact of oxygen with some products may cause a series of undesirable changes, such as producing unpleasant aromas, losing nutritional value, and changing colors, aroma, and flavor. Thus, packaging with good oxygen barrier characteristics is necessary for producing products sensitive to such gas.

In this context, paper is typically coated or treated with coatings, which provide barrier properties that are essential for packaging products which require protection, e.g., food or drug products.

Plastic-based paper coatings are commonly used. Polyolefin coatings are often used as liquid barrier layers, heat seal layers, and adhesives. Furthermore, styrene-acrylic and styrene-butadiene resins are currently available on the market for application on paper, which provide sealing and barrier properties. However, recycling this type of plastic-coated paper product is difficult, as separating polymers from fibers is difficult.

Aiming to replace plastic packaging with paper packaging, a biodegradable and compostable composition, with good sealing properties and barriers to fat and oxygen, was developed in the present invention. The composition developed herein comprises a significant amount of renewable source material and can be applied in various processes.

Although some studies use materials from renewable sources, such as carbohydrates, proteins, and lipids, which also provide barrier properties, the formulations of such studies are not easily applied in different coating systems, such as, e.g., blade, rod, air knife, and engraved roller systems.

Prior art documents using renewable source materials do not assess machine applications, only superficially suggesting it as a potential application. Due to the limitations and conditions of each barrier composition application process for packaging, prior studies were not able to develop a formulation with good application performance in the rod, engraved roller, air knife, and/or printer systems, as occurs herein. Therefore, there is a need in prior art for a sustainable barrier composition with good barrier, sealing, and application properties in various processes for making paper products.

### SUMMARY OF THE INVENTION

The present invention describes a barrier composition comprising about 20% by weight to about 50% by weight of a sealing agent, about 40% by weight to about 80% by weight of a bio-binding agent, and about 5% by weight to about 10% by weight of an anti-blocking agent, wherein the % by weight is based on the total weight of the composition.

In a preferred embodiment, the composition comprises about 35% by weight of the sealing agent, about 60% by weight of the bio-binding agent, and about 5% by weight of the anti-blocking agent.

In one embodiment of the invention, the sealing agent is selected from the group consisting of totally or partially hydrolyzed polyvinyl alcohol (PVOH), polyvinyl acetate (PVA), and poly(ethanol), preferentially polyvinyl alcohol (PVOH).

In one embodiment of the invention, the bio-binding agent is a formulation comprising starch syrup, dextrin, and modified starch.

In one embodiment of the invention, the anti-blocking agent is selected from the group consisting of stearate, emulsified waxes, carbonate, and talc, preferentially calcium stearate.

The barrier composition herein has good application, sealing and barrier properties against fat, oxygen, oils, and/or light transmission.

In one embodiment of the invention, the barrier composition comprises about 35% by weight to about 45% by weight of solids content, preferentially about 42% by weight of solids content, wherein the % by weight is based on dry weight. The solids content was measured using a drying oven or a moisture balance.

In one embodiment of the invention, the barrier composition has a viscosity of about 800 cp to about 1800 cp, preferentially about 800 cp, wherein the viscosity was measured using a Brookfield rotational viscometer, provided with an L4 axis, at 100 rpm and at a temperature of 23 °C or 40 °C.

Also described herein is the use of the barrier composition of the present invention for application in primary and secondary paper packaging.

In one preferred embodiment, the use is for application in flexible packaging, preferentially food packaging or coating packaging for pharmaceutical compositions.

Also described herein are paper packaging comprising the barrier composition of the present invention.

In a preferred embodiment, the paper packaging has a grammage of about 35 g/m² to about 90 g/m², wherein the grammage was measured in accordance with the ISO 536:2019 standard.

Further described herein is a method for manufacturing flexible packaging comprising applying the barrier composition of the present invention to a paper base material by means of rod, foil, engraved roller, air knife, or printer systems.

In one embodiment of the invention, the method for manufacturing flexible packaging comprises applying about 3 g/m² to about 15 g/m² of the barrier composition to a paper base material. In another embodiment of the invention, the flexible packaging manufactured by the method of the present invention has a grammage of about 35 g/m² to about 90 g/m², wherein the grammage was measured in accordance with the ISO 536:2019 standard.

### DEFINITIONS

The definitions of some terms/expressions used herein are presented here.

The term "barrier", as used herein, refers to the ability of a product, e.g., packaging, to resist the passage of gases, oils, and fats, as well as the transmission of light. The barrier properties of a package should not be confused with its chemical strength, which is associated with its ability not to be solubilized, altered, or softened when in contact with an agent. However, a package's barrier features are closely related to the chemical, physical, sensorial, microbiological, and biological stability of the products.

The term "sealing" refers to the adhesion of two surfaces through the application of heat and pressure for a given period of time.

The term "tack" refers to the tackiness or stickiness of the coating applied to the paper.

A "primary packaging" is the packaging which is in direct contact with the product. A "secondary packaging," in turn, is the packaging that protects the primary packaging.

The term "biodegradation" is defined as a chemical process in which materials are metabolized into water, carbon dioxide, and biomass with the aid of microorganisms. The biodegradation process depends on environmental conditions, such as, e.g., temperature, inoculum, and humidity, and on the material or its application. In order to assess the product's biodegradability, environmental conditions have to be specified and a biodegradation schedule has to be established to make the assessments measurable and comparable. Some examples of standards are EN 13432, ASTM D6400, ASTM, D5338, 15014855, ASTM 5988, ASTM D6003, ASTM G160, ABNT NBR 15448-1, and ABNT NBR 15448-2.

The term "composting" is defined as a process controlling biological decomposition and turning biodegradable materials into a humus-like substance called compost. Decomposing biodegradable material results in the production of carbon dioxide, water, minerals and stabilized organic matter (compost or humus). As such, compostable materials are those that undergo biodegradation during composting to release CO², water, inorganic compounds, and biomass at a rate consistent with other known compostable materials, leaving no visible, distinguishable, or toxic residues.

Compostable materials, which are designed to be disposable after use through organic recycling, i.e., composting, represent one of the strategic options available for waste management. Composting is an attractive alternative for reducing solid waste and is especially suitable for conventional plastics segments, in which recycling is difficult or not economically viable.

The term "repulpability" refers to the material's ability to be processed again without damaging the fibers or affecting the quality of the final paper.

The term "recyclability" refers to the property of paper to have fibers which can be reused to form new paper.

The expression "disaggregation of cellulosic pulps" refers to the mechanical treatment in water so as to reseparate from each other interlaced fibers, which were free in the pulp suspension, without appreciable change in their structural properties.

The expression "Somerville depuration" is a cleaning operation, i.e., the separation of foreign materials from cellulosic pulp.

The expression "sheet formation" consists of forming a circular sheet from a suspension of cellulosic paste, on a metallic screen, under suction, with a standardized diameter and specified grammage for physical strength tests.

The term "grammage" refers to the determination of the mass per unit area of the paper, described in grams per square meter herein.

"Tensile strength" refers to the maximum tensile force per unit width that the paper can withstand before breaking. "Tensile index", in turn, refers to the tensile strength divided by the grammage.

"Elongation" refers to the increase in length of a test piece.

"Burst strength" refers to the maximum pressure developed by the hydraulic system that forces an elastic diaphragm through a circular paper area. "Burst index", in turn, is the burst strength divided by the grammage.

"Tear strength" is the force perpendicular to the plane of the paper required to tear multiple paper sheets through a specified distance after tearing was initiated. "Tear index", in turn, refers to the tear strength divided by grammage.

### BRIEF DESCRIPTION OF THE DRAWINGS

Figure 01 depicts a graph of TGA and DSC analyzes of the R21B formulation from example 1 of the invention.
Figure 02 depicts a graph of DSC analysis of the R21B formulation from example 1 of the invention.
Figure 03 depicts a graph of pulp yield after Somerville screening of example 3 of the invention.
Figures 04 to 07 depict graphs with comparisons of physical tests for the five cycles of samples 1 and 2 of example 3 of the invention. In particular, figure 04 refers to tensile strength, figure 05 refers to burst strength, figure 06 refers to tear strength, and figure 07 refers to elongation.

### DETAILED DESCRIPTION OF THE INVENTION

The barrier composition of the present invention combines a sealing agent, a bio-binding agent, and an anti-blocking agent, so that the balance of the proportions of said constituents provides provide good application properties in various processes for manufacturing paper products, sealing and barrier against oxygen, oils, fat, and light transmission.

The barrier composition of the present invention is biodegradable and compostable.

The barrier composition of the present invention can be used for application in primary and secondary paper packaging, mainly flexible packaging, replacing plastic film application. Such a composition can be applied to papers with different grammages, e.g., about 35 g/m² to about 90 g/m² in accordance with the ISO 536:2019 standard, and uses various application systems, such as bar, blade, engraved roller, curtain, air knife, and printers.

The barrier composition for packaging of the present invention, in addition to providing sustainability and having good barrier and sealing properties, has superior runnability when compared to existing formulations, with no impregnation issues. Furthermore, the composition developed herein, when applied to a paper's surface, does not show blocking issues at temperatures of up to 60 °C. The composition herein also has an economic advantage, being applicable in several processes and various equipment, since it requires low investment as it uses inputs commonly used in papermaking.

The composition herein comprises about 20% by weight to about 50% by weight, preferentially about 35% by weight, of a sealing agent, about 40% by weight to about 80% by weight, preferentially about 60% by weight, of a bio-binding agent, and about 5% by weight to about 10% by weight, preferentially about 5% by weight, of an anti-blocking agent, wherein the % by weight is based on the total weight of the composition.

In one embodiment of the invention, the sealing agent is selected from the group consisting of totally or partially hydrolyzed polyvinyl alcohol (PVOH), polyvinyl acetate (PVA), and poly(ethanol), preferentially polyvinyl alcohol (PVOH).

In one embodiment of the invention, the bio-binding agent is a formulation comprising starch syrup, dextrin, and modified starch.

In one embodiment of the invention, the anti-blocking agent is selected from the group consisting of stearate, emulsified waxes, carbonate, and talc, preferentially calcium stearate.

In one preferred embodiment of the invention, the barrier composition comprises: (a) 20 to 50% by weight of polyvinyl alcohol (PVOH), (b) 40 to 80% by weight of bio-binding agent, and (c) 5 to 10% by weight of calcium stearate or emulsified vegetable waxes.

Polyvinyl alcohol is solubilized in water and heated to complete solubilization, providing a barrier against fat and oxygen and aiding in sealing. The bio-binding agent also aids in sealing. Stearate or emulsified waxes help in eliminating tacking and reducing blocking issues.

In one embodiment of the invention, the barrier composition comprises about 35% by weight to about 45% by weight of solids content, preferentially about 42% by weight of solids content, wherein the % by weight is based on dry weight. The solids content was measured using a drying oven or a moisture balance.

In one embodiment of the invention, the barrier composition has a viscosity of about 800 cp to about 1800 cp, preferentially about 800 cp, wherein the viscosity was measured using a Brookfield rotational viscometer, provided with an L4 axis, at 100 rpm and at a temperature of 23 °C or 40 °C.

The barrier composition of the present invention can be applied to papers of different grammages for primary and secondary paper packaging, which require heat sealing and a barrier to fat, water, oxygen, oils, and/or light transmission.

The barrier composition of the present invention can be manufactured by mixing a sealant (e.g., polyvinyl alcohol), previously solubilized in water at a temperature of 90 °C for 30 min, a bio-binding agent solubilized in water, and an anti-blocking agent (e.g., calcium stearate).

Additionally, the present invention also relates to a method for manufacturing flexible packaging. Said method comprises applying the developed barrier composition onto a paper-based material by means of rod, blade, engraved roller, air knife, or printer systems with good performance. In one embodiment of the invention, the method for manufacturing flexible packaging comprises applying the barrier composition with a grammage ranging from about 3 g/m² to about 15 g/m², preferentially from about 5 g/m² to about 10 g/m², wherein the grammage was measured in accordance with the ISO 536:2019 standard.

The grammage of the barrier composition to be applied for manufacturing packages is determined by the intended sealing and barrier performance. E.g., about 5 g/m² of barrier composition is applied in packages that only need sealing. About 10 g/m² of the barrier composition is applied to reach high fat barrier levels.

The flexible packages of the present invention show good sealing properties, which are assessed in vertical and horizontal filling machines. Furthermore, depending on the grammage of the barrier composition applied in the process, Kit 12 of oil/fat permeability can be achieved, representing a high barrier property for the packaging. In the Kit 12 method, the sample is subjected to a series of solvent mixtures of different polarities and oil, wherein the mixtures are numbered from 1 to 12, in ascending order of potency. Higher kit numbers mean better barrier properties against oil and/or fat for the sample.

In one embodiment of the invention, the flexible packaging manufactured by the method of the present invention has a grammage of about 35 g/m² to about 90 g/m², in accordance with the ISO 536:2019 standard. Said packaging is made of paper and comprises the barrier composition disclosed herein.

The paper packaging of the present invention may be primary or secondary. In a preferred embodiment, the packaging disclosed herein consists of flexible food packaging or flexible coating packaging for pharmaceutical compositions.

### EXAMPLES

The examples presented herein are non-exhaustive, are meant only to illustrate the invention, and should not be used as a basis to limit it.

### Example 1

In this example, tests are described to validate the barrier composition of the present invention with regard to sealing and tacking.

This study assesses the properties of a barrier composition of the invention comprising polyvinyl alcohol (PVOH), bio-binding agent, and calcium stearate. Specifically, the resin composition designated formulation R21B used in the tests comprises 35% by weight of PVOH, 60% by weight of bio-binder (or biopolymers) and 5% by weight of calcium stearate, wherein the bio-binder is a formulation comprising starch syrup, dextrin, and modified starch. As this formulation presented the best cost-benefit in terms of sealing and tack, tests were carried out to validate it.

To validate the R21B formulation, the following tests were carried out, on which more details will be provided below:
- Assessment of the thermal properties of the formulation;
- Assessment of resin viscosity during application;
- Application of the formulation in the engraved roller and air knife systems;
- Assessment of repulpability;
- n-heptane migration test;
- Filling test.

### Assessing the thermal properties of the R21B formulation by means of TGA and DSC

To assess the thermal properties of the resin composition, thermogravimetric analysis (TGA) and differential scanning calorimetry (DSC) were carried out.

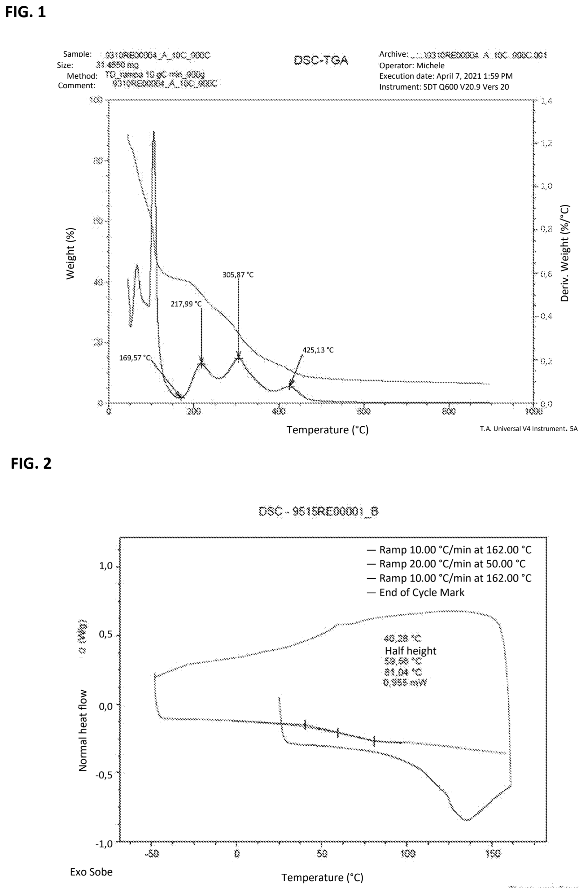

The results obtained are presented in the graphs of figures 01 and 02. As can be seen in figure 1, the onset of degradation of the R21B formulation occurs at a temperature of about 170 °C. Furthermore, as can be seen in figure 2, the glass transition temperature (Tg) is in the range between 40 °C and 80 °C, with half-height equal to 58.6 °C.

### Assessing the viscosity of the R21B formulation during application

When assessing the viscosity variation of the R21B formulation at 40% by weight of solids, a large decrease in viscosity was noted at the temperature of 40 °C, as can be seen in Table 1 below. Viscosity was measured using a Brookfield rotational viscometer, provided with an L4 axis, at 100 rpm and at temperatures of 23 °C and 40 °C.

**Table 1**

| **Conditions (temperature and time)** | **Viscosity (cp)** |
|---|---|
| Initial at 23 °C | 1650 |
| 23 °C and 60 min | 1650 |
| 40 °C and 60 min | 1010 |

### Applying the R21B formulation in engraved roller and air knife systems

The barrier composition (R21B formulation) was applied in engraved roller and air knife systems, both on a pilot scale, to validate it. Tests were carried out applying barrier compositions with grammages of 5, 7 and 10 g/m², in accordance with the ISO 536:2019 standard. The paper packaging in which the formulation was applied comprised grammages of 35 to 90 g/m², in accordance with the ISO 536:2019 standard.

The results are shown in Tables 2 and 3 below.

**Table 2 - Engraved roller application - Double layer**

| **Paper packaging coated with R21B formulation** | **Unit** | **35 g/m²** | | **46 g/m²** | | **56 g/m²** | | **70 g/m²** | | **90 g/m²** | |
|---|---|---|---|---|---|---|---|---|---|---|---|
| **R21B formulation applied** | **g/m²** | 5 | 10 | 5 | 10 | 5 | 10 | 5 | 10 | 5 | 10 |
| **Sealing strength 110 °C** | **kN/m** | 0.24 | 0.359 | 0.24 | 0.40 | 0.25 | 0.34 | 0.26 | 0.40 | 0.28 | 0.45 |
| **Blocking in an oven (60 °C and 60% humidity)** | **manual** | | | No tack or blocking | | | | | | | |
| **Oil kit (crease)** | **1 to 12** | 6 | 12 | 6 | 12 | 7 | 12 | 7 | 12 | 7 | 12 |

**Table 3 - Air Knife Application - Double Layer**

| **Paper packaging coated with R21B formulation** | **Unit** | **46 g/m²** | | **70 g/m²** | |
|---|---|---|---|---|---|
| **R21B formulation applied** | **g/m²** | 5 | 10 | 7 | 10 |
| **Sealing strength 110 °C** | **kN/m** | 0.265 | 0.300 | 0.290 | 0.350 |
| **Blocking in an oven (60 °C and 60% humidity)** | **manual** | No tack or blocking | | | |
| **Oil kit (crease)** | **1 to 12** | 6 | 12 | 7 | 12 |

### Assessing repulpability

The repulpability assessment consists of quantifying waste and the formation of small sheets, following the TAPPI T 275 sp-18 and ABNT NBR ISO 5263-1 standards.

In the present study, the material's repulpability was assessed by applying 5 g/m² of R21B formulation and it was concluded that the material is repulpable. Table 4 illustrates repulpability.

**Table 4**

| **Properties** | **Repulpability** | |
|---|---|---|
| | Sample 1 | Sample 2 |
| Crucible tare (g) | 52.546 | 46.356 |
| Dry load (waste) (g) | 52.62 | 46.433 |
| Waste content (%) | 0.148 | 0.154 |

### N-heptane migration test

The n-heptane migration test is a required migration analysis for materials that come into contact with food, according to Anvisa's (the Brazilian FDA) RDC 88 regulation.

In the present test, the migration in n-heptane of the material with application of 10 g/m² was assessed and it was found that the residue obtained is below the maximum limit of 8 mg/dm². Details of said test can be found in Table 5 below.

**Table 5**

| **Migration in N-Heptane** | | | | **Beaker (Tare)** | **Beaker + Residue** | **Residue (g)** | **Residue minus blank control (g)** | **Residue minus blank control (mg)** | **MT (mg/dm²) N-HEPTANE** |
|---|---|---|---|---|---|---|---|---|---|
| Sample | R21B+10g | Beaker # | White | 51.2651 | 51.2666 | 0.0015 | | | |
| SIP | 7299/21 | 1 | 2 | 51.0097 | 51.0786 | 0.0689 | 0.0674 | 67.40 | 2.25 |
| | | 3 | | 50.6123 | 50.6776 | 0.0653 | 0.0638 | 63.80 | 2.13 |
| Date | July 02, | 11 | | 48.7726 | 48.8383 | 0.0657 | 0.0642 | 64.20 | 2.14 |
| LRA | 9398PP00003 | | Average Result | | | | | | 2.17 |
| | | | Standard deviation | | | | | | 0.07 |

### Test completion

For this test, horizontal and vertical flowpack filling machines were used. Coils with grammages of 46, 56 and 70 g/m² were used, in accordance with the ISO 536:2019 standard, with applications of 5 and 10 g/m² of R21B resin, and all samples showed good sealing. The ideal temperature for the jaw was between 180 and 190 °C, both in the horizontal and vertical flowpack machines.

### Example 2

This example describes a test for assessing runnability of the barrier composition of the present invention in machines, particularly its applicability to engraved roller. The tested composition refers to the R21B formulation, and the composition application grammage was 5 g/m² and 10 g/m², in accordance with the ISO 536:2019 standard.

The present study aims to technically validate (both runnability and quality) the high speed (up to 400 m/min) "Engraved Roller" applicator to apply the R21B barrier composition of the present invention to flexible paper products, e.g., straws.

The industrial coating equipment used had the following specifications:
- Width: 2.080 mm;
- Speed: 400 m/min;
- Applicator: 01 Engraved Roller Header + 01 nip roller header for silicone rubber + 01 Flexo header for printing on the back;
- Other information: large hot air hoods, infrared after flexo printing, and a maximum coil diameter at the entrance of 1,000 mm were used for drying.

For the test, an Anilox Cylinder was used to apply 5 g/m²; an R21B barrier composition (PVOH/Bio-binder/stearate, in proportions of 35/60/5) with different % by weight of solids, measured by moisture and viscosity balance, measured using a Brookfield rotational viscometer, provided with an L4 axis, at 100 rpm and at a temperature of 23 °C; and the following base papers:
- Base 35 g, three coils (6,900 m + 20,300 m + 20,200 m),
- Base 46 g, one coil (14,400 m),
- Base 70 g, two coils (13,400 m 13,100 m).

The test was conclusive and validates the high-productivity "Engraved Roller" application system for applying the R21B water-based barrier, used on flexible grades with 5 g/m² (sealing) and 10 g/m² (sealing and fat).

Regarding the stability of the barrier composition of the present invention, two days were spent applying the barrier without any operational problems related thereto, such as lump formation, roller builup, filter clogging and the like. It is therefore concluded that the barrier composition is very stable.

With regard to speed and productivity, it can be seen that a run of up to 290 m/min was possible, applying an average of 5 g of barrier with the cylinder in the lowest grammage (35 g/m²) of base paper. The quality was approved, as good coverage and sealing were observed. The limit of 290 m/min was due to the calibration of the machine's tension sensors for the grammage at hand, which caused the header to open at that speed. It was observed that the paper did not break, so it was possible to work at higher speeds. This was confirmed at a grammage of 46 g/m², where a speed of 400 m/min (the machine's limit) was achieved, and this grammage already matched the machine's previous calibrations, which operate at 50 g/m².

The sealing quality and fat kit results of the tested barrier composition are shown in Table 6.

**Table 6**

| | Sample | | | | | | |
|---|---|---|---|---|---|---|---|
| | 1 | 2 | 3 | 4 | 5 | 6 | 7 |
| Sealing (kN/m) 110 °C/340 N/0,5 s | 0.229 | 0.234 | 0.252 | 0.252 | 0.292 | 0.234 | 0.234 |
| | 0.222 | 0.239 | 0.237 | 0.224 | 0.259 | 0.229 | 0.217 |
| | 0.239 | 0.237 | 0.232 | 0.257 | 0.239 | 0.2 | 0.2 |
| | 0.21 | 0.205 | 0.232 | 0.237 | 0.215 | 0.224 | 0.242 |
| | 0.222 | 0.232 | 0.237 | 0.249 | 0.252 | 0.202 | 0.267 |
| Average | 0.224 | 0.229 | 0.238 | 0.244 | 0.251 | 0.218 | 0.223 |
| Fat kit | 7 | 7 | 7 | 7 | 7 | 7 | 12 |

Sample 1: 35 + 5 LC (39% diluted/speed 200 m/min); Sample 2: 35 + 5 (41.8%/speed 150 m/min base coil 2); Sample 3: 46 + 5 1st Coil (41.8%/speed 300 m/min); Sample 4: 46 + 5 2^{nd} Coil (41.8%/speed 300 m/min); Sample 5: 46 + 5 3^{rd} Coil (41.8%/speed 400 m/min); Sample 6: 70 + 5 R21B (1^{st} Passage 41.8%/speed 400 m/min); Sample 7: 70 + 10 R21B dual application (speed 400 m/min). Wherein:
35 + 5 - 35 g/m² grammage uncoated paper with application of 5 g/m² of R21B resin;
46 + 5 - 46 g/m² grammage uncoated paper with application of 5 g/m² of R21B resin;
70 + 5 - 70 g/m² grammage uncoated paper with application of 5 g/m² of R21B resin;
70 + 5 - 70 g/m² grammage uncoated paper with application of 10 g/m² of R21B resin.

The sealing quality test passed all tests, as the minimum specification is 0.200 KN/m.

Regarding the fat kit, a good value was achieved for an application of 5 g/m² (Kit 7), and the maximum expected value was achieved for an application of 10 g/m² (Kit 12). Higher Kit numbers mean better oil and/or fat barrier properties of the sample.

### Example 3

In this example, an assessment of the recyclability of two samples is carried out. To this end, disaggregation, purification, formation of sheets and physical-mechanical tests were carried out to show the samples' recyclability aspect.

The samples, indicated below, were tested according to specific technical standards and procedures. Assays were carried out in triplicate.
- Sample 1- GNS 56 BR: 46 g/m² uncoated paper with application of 10 g/m² of the R21B formulation;
- Sample 2 - GNS 80 BR: 70 g/m² coated paper with application of 10 g/m² of the R21B formulation.

The samples were disaggregated in accordance with the ABNT NBR ISO 5263-1:2005 standard, with a total of 150 initial gs being disaggregated. The total hydration time of the sample before disaggregation was around 20 hours. After disaggregation, the samples were screened in a Somerville screener with a 0.15 mm slot. After depuration, 150 g/m² sheets were made in accordance with the NBRISO 5268-2 standard, with tensile, burst, and tear tests being carried out. The sheets of the first cycle were disaggregated and screened and retested for tensility, breaking, and bursting. This continued successively until the 5^{th} cycle. Table 7 indicates standards and procedures under which the samples were tested.

**Table 7**

| **Analysis** | **Standard used** |
|---|---|
| Cellulose Pulps - Wet disaggregation in the laboratory Part 1: Disaggregation of chemical cellulosic pulps | ABNT NBR ISO 5263-1:2005 |
| Paper and paperboard - Determining tensile properties Part 2: Constant speed elongation method (20 mm/min) (ISO 1924-2:2008 IDT) | ABNT NBR NM ISO 1924-2:2012 |
| ISO Sheet Forming | NBRISO 5268-2 |
| Paper - Determining burst strength | ABNT NBR NM ISO 2758:2007 |
| Paper - Determining tear strength - Elmendorf method | ABNT NBR NM ISO 1974:2001 |

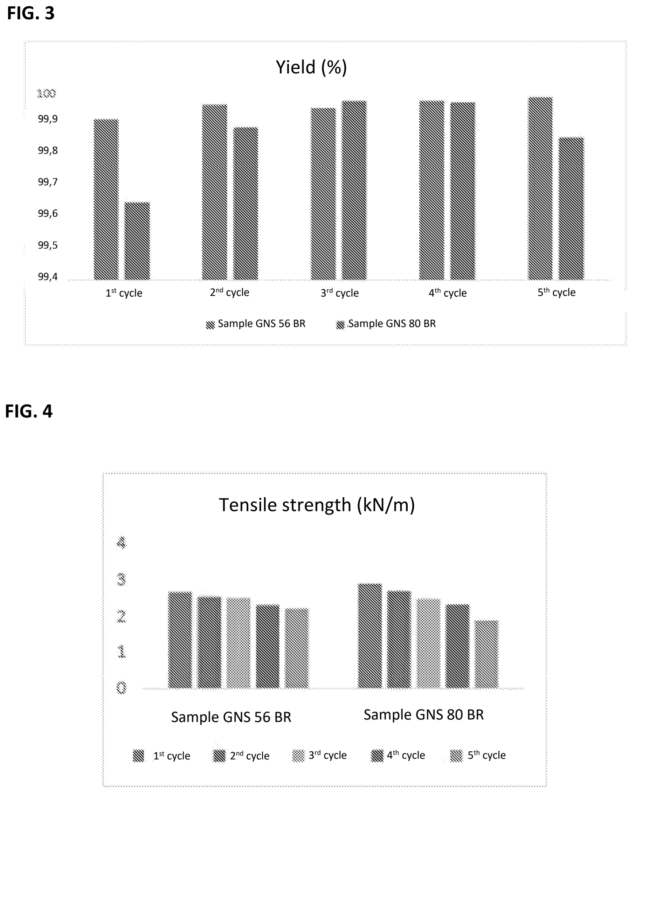

Table 8 and figure 03 indicate the pulp yield after Somerville screening (0.15 mm slot) in relation to the previous cycle.

**Table 8**

| **Yield (%)** | | |
|---|---|---|
| | **Sample 1 - GNS 56 BR** | **Sample 2 - GNS 80 BR** |
| **1^{st} cycle** | 99.917 | 99.650 |
| **2^{nd} cycle** | 99.964 | 99.890 |
| **3^{rd} cycle** | 99.952 | 99.976 |
| **4^{th} cycle** | 99.977 | 99.971 |
| **5^{th} cycle** | 99.988 | 99.859 |

The pulp yield shows that there are no rejects in the purification process, using every fiber.

Regarding the sheet formation, sheets were made with 150 g/m².

Tables 9 and 10 indicate the physical tests for samples 1 and 2.

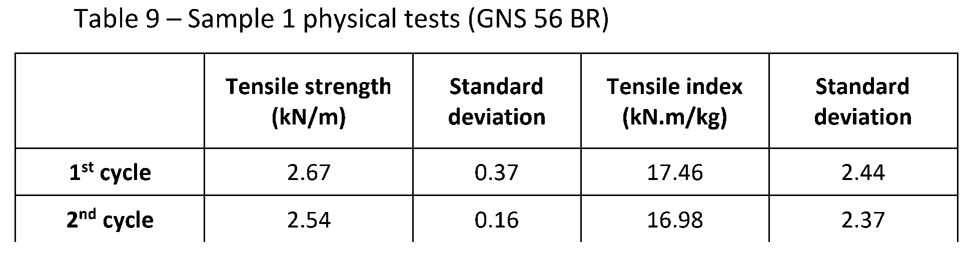

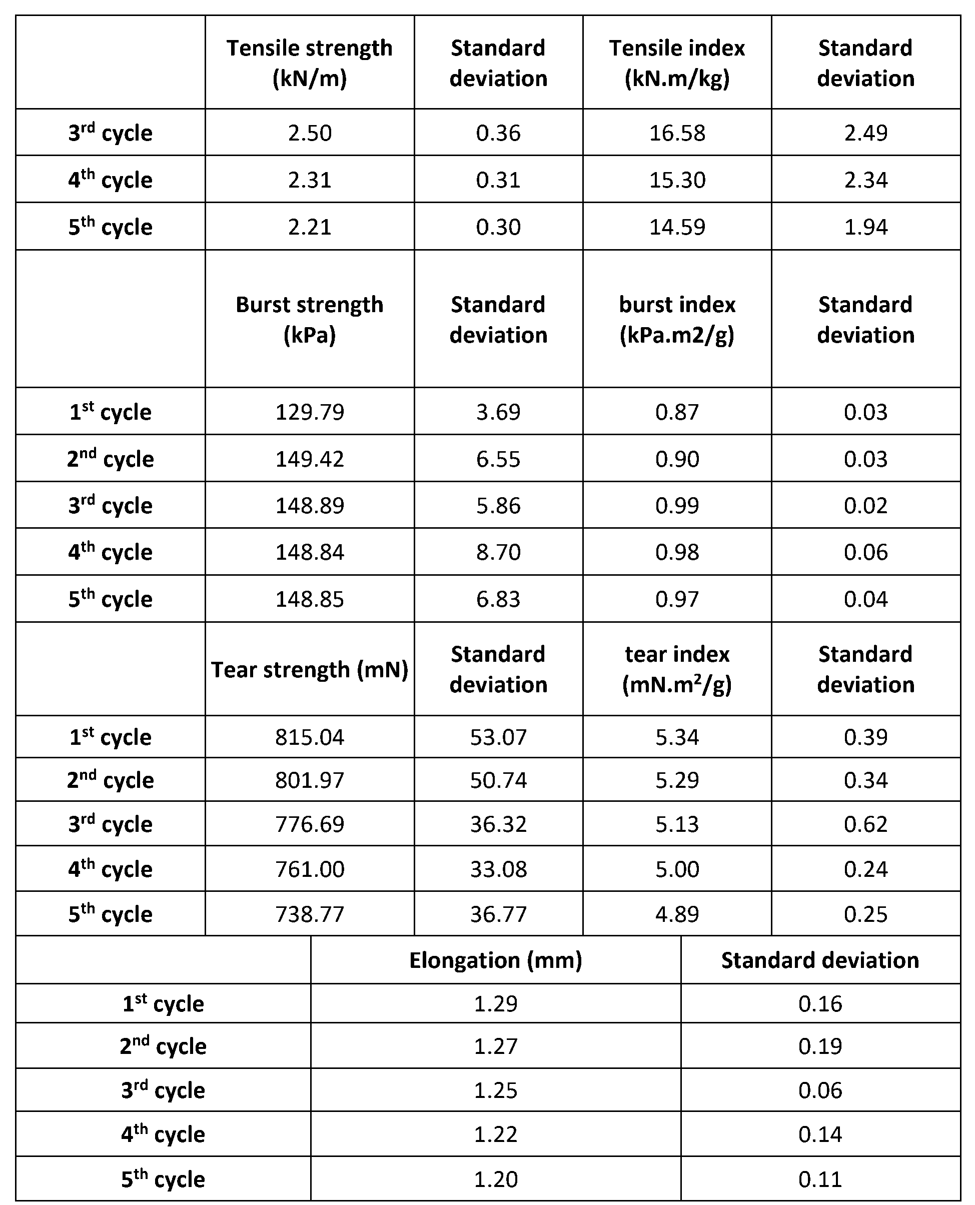

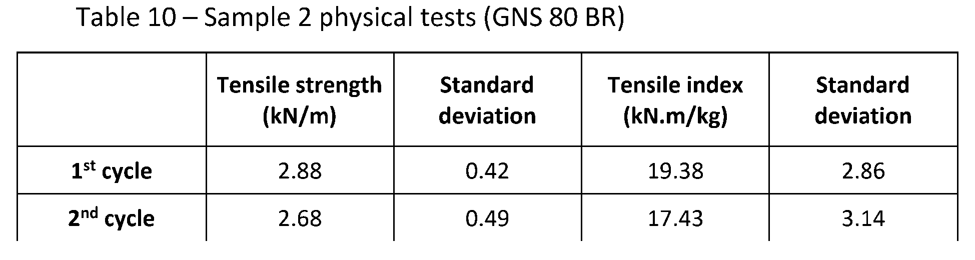

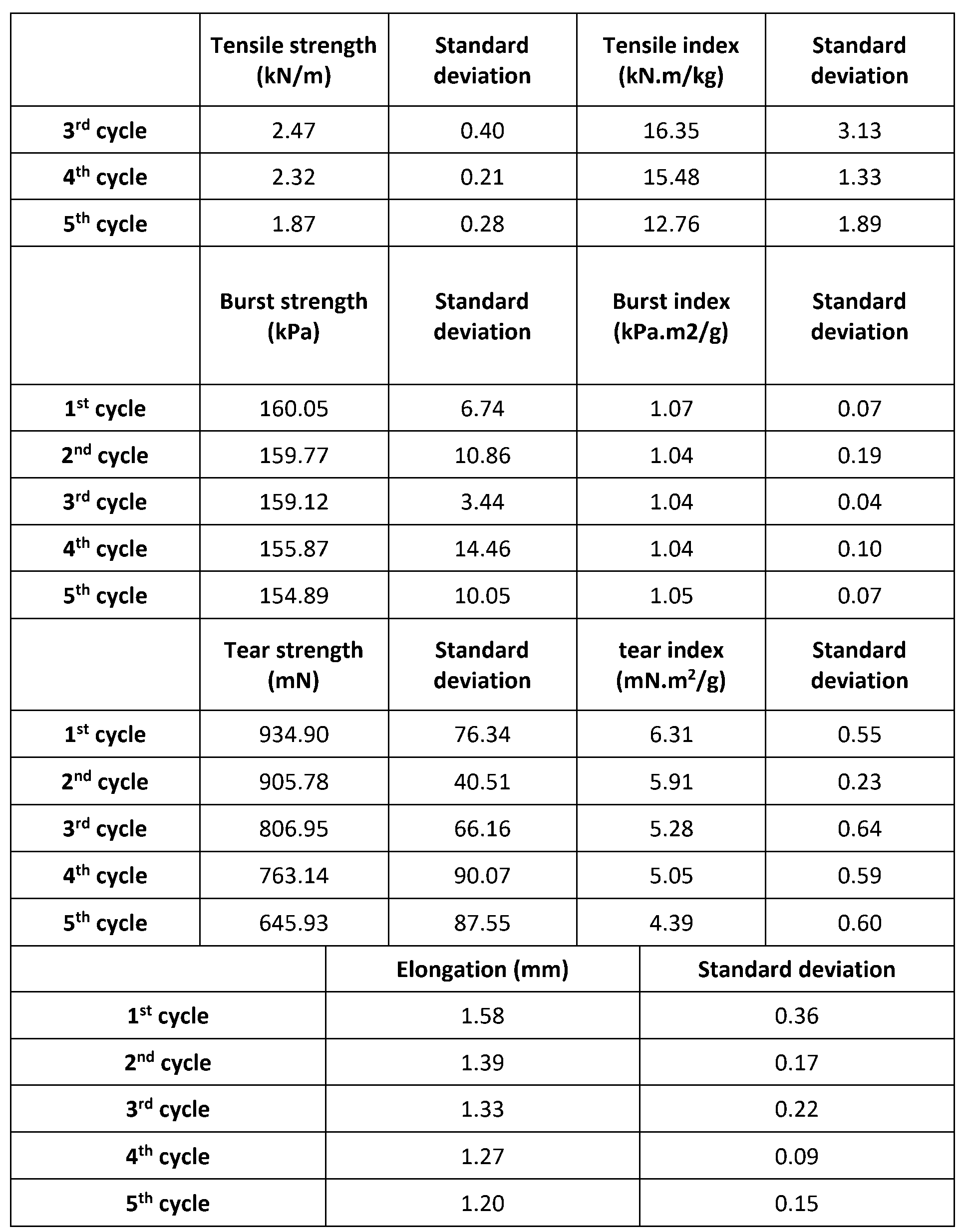

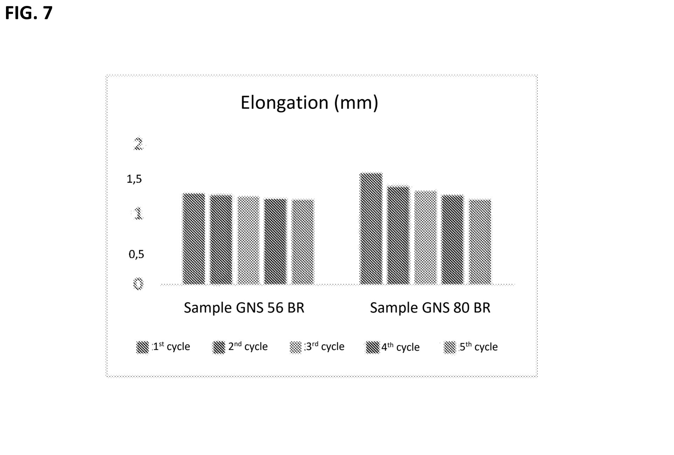

Figures 04 to 07 show the comparisons of physical tests for the five cycles of samples 1 and 2.

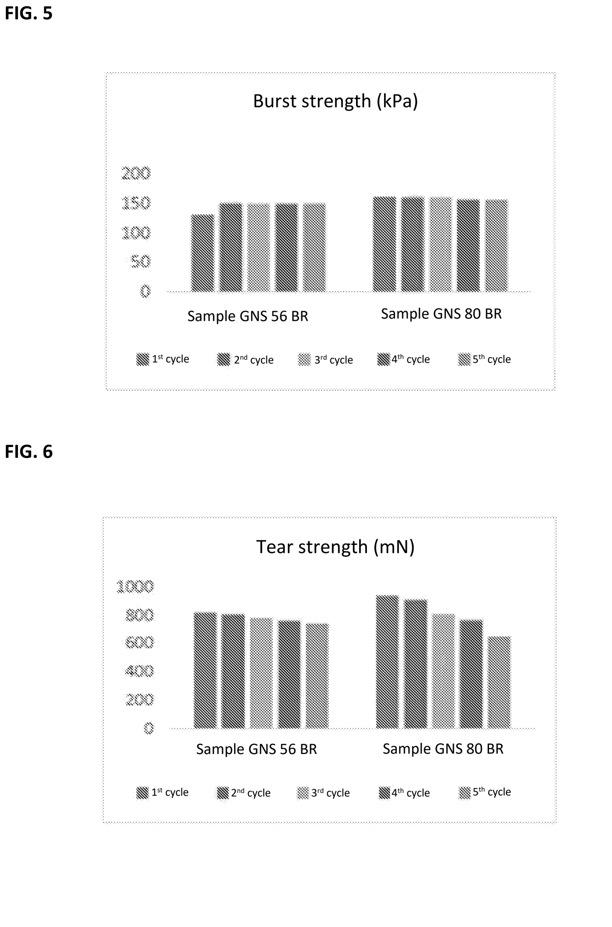

As can be seen in the tables above and in figures 04 to 06, there is a drop in strength across the cycles for both sample 1 (GNS 56 BR) and sample 2 (GNS 80 BR), with the exception of burst strength. As can be seen in figure 05, the burst strength for sample 1 (GNS 56 BR) remains at very similar values across the cycles, whereas for sample 2 (GNS 80 BR) there is a slight decrease.

The drop in strength was already expected and the explanation is based on two main items, which are the reduction of microfibrils during each cycle and the loss of fiber flexibility when passing through the drying process due to hemicellulose stiffening.

Although there was an expected reduction in strength, the sheet formation and appearance were normal, indicating that they are recyclable.

## Claims

1. Barrier composition, **characterized in that** it comprises about 20% by weight to about 50% by weight of a sealing agent, about 40% by weight to about 80% by weight of a bio-binding agent, and about 5% by weight to about 10% by weight of an anti-blocking agent.

2. Composition according to claim 1, **characterized in that** it comprises about 35% by weight of the sealing agent, about 60% by weight of the bio-binding agent, and about 5% by weight of the anti-blocking agent.

3. Barrier composition according to claim 1 or 2, **characterized in that** the sealing agent is selected from the group consisting of totally or partially hydrolyzed polyvinyl alcohol (PVOH), polyvinyl acetate (PVA), and poly(ethanol).

4. Barrier composition according to claim 3, **characterized in that** the sealing agent is polyvinyl alcohol (PVOH).

5. Barrier composition according to any one of claims 1 to 4, **characterized in that** the bio-binding agent is a formulation comprising starch syrup, dextrin, and modified starch.

6. Barrier composition according to any one of claims 1 to 5, **characterized in that** the anti-blocking agent is selected from the group consisting of stearate, emulsified waxes, carbonate, and talc.

7. Barrier composition according to claim 6, **characterized in that** the anti-blocking agent is calcium stearate.

8. Barrier composition according to any one of claims 1 to 7, **characterized in that** it comprises about 35% by weight to about 45% by weight of solids content, preferentially about 42% by weight of solids content.

9. Barrier composition according to any one of claims 1 to 8, **characterized in that** it has a viscosity of about 800 cp to about 1800 cp, preferentially about 800 cp.

10. Use of the barrier composition defined in any one of claims 1 to 9, **characterized in that** it is for application in primary and secondary flexible paper packaging.

11. Use according to claim 10, **characterized in that** it is for application in food packaging or coating packaging for pharmaceutical compositions.

12. Manufacturing method for flexible packaging, **characterized in that** it comprises applying the barrier composition defined in any one of claims 1 to 9 to a paper base material by means of bar, blade, engraved roller, curtain, air knife, or printer systems.

13. Method according to claim 12, **characterized in that** it comprises applying about 3 g/m² to about 15 g/m² of the barrier composition to a paper base material.

14. Method according to claim 12 or 13, **characterized in that** the obtained flexible packaging has a grammage of about 35 g/m² to about 90 g/m².

15. Paper packaging, **characterized in that** it comprises the barrier composition defined in any one of claims 1 to 9 and has a grammage of about 35 g/m² to about 90 g/m².

16. Invention of product, process, system, kit, or use **characterized in that** it comprises one or more elements described in the present patent application.
